# EUROPÄISCHE PATENTSCHRIFT

(11) **EP 4 144 547 B1**
(45) Veröffentlichungstag und Bekanntmachung des Hinweises auf die Patenterteilung: **01.05.2024**
(21) Anmeldenummer: 22193559.6
(22) Anmeldetag: 01.09.2022
(51) Int. Cl.: B60G 7/00, B60G 11/28, F16F 9/04, F16F 9/05, F16F 9/54, B60G 9/00

(54) **LUFTFEDERBAUGRUPPE FÜR EINE STARRACHSE MIT VEREINFACHTER MONTIERBARKEIT**
AIR-SUSPENSION MODULE FOR A RIGID AXLE WITH SIMPLIFIED INSTALLATION
MODULE DE SUSPENSION PNEUMATIQUE POUR UN ESSIEU RIGIDE À INSTALLATION SIMPLIFIÉE

(30) Priorität: 03.09.2021 DE 102021122897
(43) Veröffentlichungstag der Anmeldung: 08.03.2023
(73) Patentinhaber: JOST-WERKE Deutschland GmbH, 63263 Neu-Isenburg (DE)
(72) Erfinder: Ens, Alexander, 33014 Bad Driburg (DE); Germershausen, Christof, 37075 Göttingen (DE); Neutze, Tobias, 34379 Calden (DE)
(74) Vertreter: Ruttensperger Lachnit Trossin Gomoll

(56) Entgegenhaltungen:
- EP-A2- 0 590 317
- DE-A1- 3 811 306
- DE-A1-102007 008 965
- DE-A1-102011 051 237
- DE-B3-102013 106 290
- DE-U1- 29 615 901

## Beschreibung

Die vorliegende Erfindung betrifft eine Luftfederbaugruppe für eine Starrachse eines Nutzfahrzeugs, insbesondere eines Lastkraftwagens, gemäß dem Oberbegriff des Anspruchs 1 .

Eine derartige Luftfederbaugruppe ist aus der DE 10 2013 106 290 B3 bekannt.

Aus der DE 38 11 306 A1 ist eine Befestigungsvorrichtung für die Spindel einer Gasfeder bekannt. Die Befestigungsvorrichtung umfasst eine aus Kunststoff bestehende Spindel, an deren Fußfläche eine nach unten gerichtete Aussparung angeordnet ist, in welcher sich ein Ringkörper befindet. Dazu wird ein Halteelement verwendet, das radial nach innen gerichtete Zähne aufweist, die im Montagefall am Ringkörper angreifen. Das Halteelement besitzt ferner radial nach außen gerichtete Zungen, die im Montagefall an einer Lippe eines an der Befestigungsplatte befindlichen Kragens angreifen, die die Öffnungsweite des Kragens bestimmt. Die Spindel wird durch eine Schnappbewegung in ihre ordnungsgemäße Position überführt und kann durch ein Hebewerkzeug wieder von der Montageplatte abgezogen werden.

Eine weitere durch eine Schnappbewegung montierte Anbringungsvorrichtung für eine Luftfeder eines Kraftfahrzeugs ist aus der EP 0 590 317 A2 bekannt. Diese Druckschrift offenbart ganz allgemein eine einteilige Befestigungsvorrichtung zur Montage eines Endes eines Luftbalgs an einem Trägerbauteil. Die Befestigungsvorrichtung hat eine Vielzahl von ersten flexiblen Fingern, die in einer Spitze enden, die mit einer sich nach außen erstreckenden Schulter und einer sich verjüngenden Nockenfläche versehen ist. Die Finger werden durch den Eingriff der Nockenflächen mit einer Stützkomponente nach innen bewegt, wenn die Finger durch eine darin ausgebildete Öffnung geführt werden, und kehren danach in ihre ursprüngliche Position zurück.

Aus der DE 10 2011 051 237 A1 ist ein Abrollkolben für einen Luftfederrollbalg bekannt, dessen Innenraum mit dem Innenraum der Luftfeder in Verbindung steht und der aus mindestens zwei Teilen besteht, nämlich einem topfförmigen Kolbenunterteil und einem mit dem Kolbenunterteil luftdicht verbundenen Kolbenoberteil. Am Kolbenboden oder im unteren Bereich der rotationssymmetrischen Kolbenwandung des Kolbenunterteils ist eine mit dem Anschlussteil der mit dem Kolbenunterteil verbundenen Masse zusammenwirkende Rast- oder Schnappverbindung vorgesehen.

Aus der DE 296 15 901 U1 ist eine Luftfeder für Luftfederachsen mit einem fahrgestellfesten Deckel bekannt. Die Luftfeder umfasst außerdem einen an seiner Unterseite offenen, auf einem rückwärtigen Ende eines Längslenkers abgestützten Tauchkolben sowie einen zwischen dem Deckel und dem Tauchkolben eingesetzten Rollbalg. Auf dem Längslenker ist ein in den Tauchkolben passender Topf befestigt. Der Tauchkolben und der Topf sind voneinander getrennte, auseinanderbewegbare Bauteile. An der Unterseite und/oder im Inneren des Tauchkolbens ist mindestens eine Zentriervorrichtung zum Einführen des Topfes in den Tauchkolben angeordnet.

Aus der DE 10 2007 008 965 A1 ist ein einen Kolben für eine Fahrzeug-Luftfeder bekannt. Der Kolben besteht aus einem kappenartigen, mit einem elastischen Federbalg zu verbindenden Kolbenkörper mit einem Druckmittelanschluss. Der Kolbenkörper ist als einstückiges Formteil ausgebildet und der Druckmittelanschluss ist von mindestens einer zum direkten Einstecken eines Anschlusssteckers konzipierten Aufnahmeöffnung des Formteils gebildet. Die Aufnahmeöffnung weist einen Dichtabschnitt mit einer Innenfläche zur Anlage einer Umfangsdichtung des Anschlusssteckers und einen Halteabschnitt für ein Verriegelungselement zum lösbaren Verriegeln des eingesteckten Anschlusssteckers auf. Der Kolbenkörper weist mindestens zwei mit zueinander parallelen Öffnungsachsen benachbart nebeneinander angeordnete Aufnahmeöffnungen für je einen Anschlussstecker auf, wobei den Aufnahmeöffnungen ein einzelnes, gemeinsames Mehrfach-Verriegelungselement zum lösbaren Verriegeln jedes der eingesteckten Anschlussstecker zugeordnet ist.

Eine weitere Luftfederbaugruppe ist im einschlägigen Fachgebiet unter der Produktbezeichnung "DCA Railmaster" der Anmelderin bekannt. Diese Railmaster-Luftfederbaugruppe ist eine Ausführung, welche für die Verladung von luftgefederten Lkw-Nutzfahrzeugen auf andere Transportmittel konstruiert wurde. Das meistgenutzte andere Transportmittel für einen solchen Huckepack-Transport von Lkw-Nutzfahrzeugen ist die Eisenbahn, daher der Produktname.

An Starrachsen von Lkw-Nutzfahrzeugen ist die Luftbalghalterung, welche in der Regel ein längliches Bauteil ist, mit einem Montageende an einem Achskörper der Starrachse festgelegt und kragt von diesem quer zur Achsrichtung des Achskörpers aus. An dem dem Montageende entgegengesetzten Tragende der Luftbalghalterung ist die Luftbalgbaugruppe über ihren Stützkörper abgestützt. Der Luftbalg der Luftbalgbaugruppe verformt sich im Betrieb bestimmungsgemäß elastisch längs einer virtuellen Federbahn. In der Regel ist der Luftbalg in Richtung von der Luftbalghalterung weg längs der Federbahn auf den Stützkörper folgend angeordnet und mit dem Stützkörper verbunden. Der Luftbalg ist mit dem Fahrzeugrahmen fest verbunden. Somit ist der Fahrzeugrahmen über die Luftbalgbaugruppe federnd am Achskörper abgestützt.

Bei zahlreichen herkömmlichen Luftfederbaugruppen ist der Stützkörper ebenso fest mit der Luftbalghalterung verbunden wie der Luftbalg fest mit dem Fahrzeugrahmen verbunden ist, beispielsweise mittels zwei mit jeweils parallelen Schäften angeordnete Schrauben oder Gewindestifte verschraubt.

Beim Verladevorgang eines Lkw-Nutzfahrzeugs mit einer luftgefederten Starrachse wird das Fahrzeug üblicherweise durch ein am Fahrzeugrahmen angreifendes Hebezeug vom Boden abgehoben und auf das weitere Transportmittel abgesetzt. Nach dem Abheben des Lkw-Nutzfahrzeugs vom Boden übt der nun am Fahrzeugrahmen hängende und vom Fahrzeugrahmen gehaltene Achskörper eine Zugkraft auf die Luftbalgbaugruppe aus, durch welche der Luftbalg vollständig gestreckt werden kann. Beim anschließenden Absetzen besteht das Risiko, dass ein aus der gestreckten Stellung einfedernder Luftbalg ausknickt, anstatt in seine bestimmungsgemäße, längs der Federbahn teilkomprimierte Betriebsposition zurückzukehren. Ein geknickter Luftbalg hat nicht nur jegliche Federwirkung verloren, so dass das ursprünglich luftgefederte Fahrzeug nicht mehr betriebsbereit ist. Er droht überdies, zwischen Stützkörper und Fahrzeugrahmen, die sich mangels Federwirkung nun bis zum Anschlag aneinander annähern können, beschädigt zu werden.

Zu diesem Zweck ist bei der oben genannten Ausführungsform des "DCA Railmaster" als eine Sonderlösung vorgesehen, dass der Stützkörper lediglich abhebbar auf der Luftbalghalterung aufliegt. Bei der Verladung eines mit dieser Ausführungsform ausgestatteten Nutzfahrzeugs zum Huckepack-Transport wird also der Stützkörper von der Luftbalghalterung abgehoben und bleibt von dieser bis zum erneuten Absetzen des Nutzfahrzeugs getrennt. Beim Absetzen werden Stützkörper und Luftbalghalterund einander angenähert und der Stützkörper wird erneut an der Luftbalghalterung abgestützt. Der Der Achskörper kann folglich keine Zugkraft mehr auf den Luftbalg übertragen und der Luftbalg kann somit nicht mehr durch die Gewichtskraft des Achskörpers gestreckt werden.

Zur Lagefixierung des Stützkörpers an der Luftbalghalterung greift der Kopplungsvorsprung in die Kopplungsaufnahme ein und verhindert körperlich eine translatorische Relativbewegung zwischen Stützkörper und Luftbalghalterung orthogonal zur Vorspannungsrichtung. Damit sich beim erneuten Aufsetzen des Nutzfahrzeugs die Luftbalghalterung und der Stützkörper wieder finden und der Stützkörper positionsgenau an der Luftbalghalterung abgestützt werden kann, ist an der Ausführungsform "DCA Railmaster" der Kopplungsvorsprung längs der Vorsprungsbahn zum Stützkörper hin verjüngt ausgebildet und ist die Kopplungsausnehmung komplementär zum Kopplungsvorsprung ausgebildet. Hierdurch wird bei Annäherung von Kopplungsvorsprung und Kopplungsausnehmung aneinander eine Zentrierwirkung erreicht.

Wie oben bereits erwähnt, ist außerhalb der nur für den Huckepack-Transport konzipierten Partikularlösung der Stützkörper mit der Luftbalghalterung verschraubt, was den Montageprozess der Luftfederbaugruppe am Fahrzeug umständlich macht. Der die Luftbalghalterung tragende Achskörper ist ebenso wie der Luftbalg mit dem Fahrzeugrahmen in einer Weise unmittelbar verbunden, die jeder der genannten Baugruppen eine konstruktiv vorbestimmte Relativkinematik zum Fahrzeugrahmen aufzwingt. Im Rahmen der jeweiligen Relativkinematiken müssen Luftbalghalterung und Stützkörper gepaart und durch Verschraubung fixiert werden, sodass die Luftbalgbaugruppe in herkömmlichen Luftfederbaugruppen mit Ausnahme der DCA Railmaster nicht nur an der Luftbalghalterung abgestützt, sondern an dieser auch gegen ein Abheben gesichert ist.

Der vorliegenden Erfindung liegt die Aufgabe zu Grunde, eine Luftfederbaugruppe anzugeben, welche einfacher als bisher mit der Luftbalghalterung gekoppelt und an dieser gegen ein Abheben gesichert werden kann.

Diese Aufgabe löst die vorliegende Erfindung mittels einer eingangs genannten Luftfederbaugruppe mit allen Merkmalen des Anspruchs 1.

Die vorliegende Erfindung schlägt eine Verrastung des Stützkörpers an der Luftbalghalterung vor.

Durch den Eingriff des Kopplungsvorsprungs in die Kopplungsausnehmung kann eine ausreichende Positionierung und Ausrichtung von Stützkörper und Luftbalghalterung relativ zueinander sichergestellt werden, die einen Rasteingriff von Rastkörper und Rastausnehmung zur Sicherung von Stützkörper und Luftbalghalterung aneinander ohne weiteres, insbesondere ohne Werkzeugeingriff, gestattet.

Der Rastkörper kann zur Herstellung des Rasteingriffs wenigstens abschnittsweise in einer Richtung quer zur Vorsprungsbahn beweglich an dem ihn tragenden Bauteil angeordnet sein.

Grundsätzlich kann es ausreichen, dass der Rasteingriff die Relativbewegbarkeit von Stützkörper und Luftbalghalterung längs der Vorsprungsbahn in beiden entgegengesetzten Richtungen begrenzt, aber innerhalb der Grenzen eine Relativbewegung möglich ist, beispielsweise mit einem Bewegungsspiel von einigen wenigen Millimetern. Bevorzugt ist jedoch der Stützkörper durch den Rasteingriff längs der Vorsprungsbahn spielfrei mit der Luftfederbaugruppe verbunden.

Um ein unbeabsichtigtes Lösen des Rasteingriffs und damit ein unbeabsichtigtes Abheben des Stützkörpers von der Luftbalghalterung zu verhindern, ist der Rasteingriff bevorzugt ein nicht-überwindbarer Rasteingriff. Dabei bedeutet "nicht-überwindbar", dass der Rasteingriff so ausgelegt und dimensioniert ist, dass der Rasteingriff im Falle eines Abhebens des eine Starrachse mit der Luftfederbaugruppe aufweisenden Fahrzeugs vom Boden durch die auf ihn einwirkende Gewichtskraft der betriebsbereiten Starrachse nicht gelöst wird.

Sofern in der vorliegenden Anmeldung nichts Abweichendes ausdrücklich ausgesagt ist, beschreibt die vorliegende Anmeldung die Erfindung im betriebsbereiten Zustand der Luftfederbaugruppe, d. h. eingebaut zwischen dem Fahrzeugrahmen eines Fahrzeugs und einem Achskörper einer auf einem festen Untergrund aufstehenden und den Fahrzeugrahmen tragenden Starrachse.

Zur vorteilhaften selbsttätigen Herstellung des oben genannten Rasteingriffs bei einer Annäherung von Stützkörper und Luftbalghalterung aneinander kann gemäß einer vorteilhaften Weiterbildung der vorliegenden Erfindung vorgesehen sein, dass zumindest vor einem Einführen des Verbindungsvorsprungs längs der Vorsprungsbahn in die Kopplungsausnehmung und somit vor Herstellung des Rasteingriffs wenigstens ein zum unmittelbaren Formschlusseingriff mit der Rastausnehmung ausgebildeter Eingriffsabschnitt des Rastkörpers in seine Eingriffsstellung vorbelastet und gegen diese Vorbelastung aus der Eingriffsstellung verlagerbar ist. Somit kann es ausreichen, den Fahrzeugrahmen zur Montage mit der die Luftbalgbaugruppe aufweisenden Starrachse an die über Räder auf einem festen Untergrund aufstehende Starrachse anzunähern. Mit zunehmender Annäherung kann das Gewicht des Fahrzeugrahmens die zur Verlagerung des Eingriffsabschnitts aus der Eingriffsstellung notwendige Kraft liefern. Die Verlagerung des Eingriffsabschnitts aus der Eingriffsstellung dauert dabei bevorzugt solange an, bis die Rastausnehmung durch die Annäherung in eine Position gelangt ist, in welcher der Eingriffsabschnitt aufgrund seiner Vorbelastung sich zurück in seine Eingriffsstellung verlagert, die sich dann in der Rastausnehmung befindet. Der Eingriffsabschnitt ist dann bevorzugt von drei Seiten von Material des die Rastausnehmung aufweisenden Bauteils umgeben.

Bevorzugt ist wenigstens der Eingriffsabschnitt des Rastkörpers quer zur Vorsprungsbahn beweglich bzw. verlagerbar an dem den Rastkörper aufweisenden Bauteil aufgenommen.

Bevorzugt ist der Eingriffsabschnitt auch nach Herstellung des Rasteingriffs in seine Eingriffsstellung vorbelastet. Durch die Belastung des Eingriffsabschnitts im betriebsbereiten Zustand der Luftbalgbaugruppe mit der Gewichtskraft des Fahrzeugrahmens kann der Eingriffsabschnitt zusätzlich zu seiner Vorbelastung durch eine dann zwischen einer Wand der Rastausnehmung und dem an ihr anliegenden Eingriffsabschnitt wirkende Reibungskraft in der Eingriffsstellung gehalten sein.

Wenngleich es im Rahmen der vorliegenden Erfindung grundsätzlich vorstellbar ist, dass der Eingriffsabschnitt durch sein Eigengewicht in die Eingriffsstellung vorbelastet ist, ist zur Bereitstellung einer definierten Vorbelastung des Eingriffsabschnitts unabhängig von dessen Orientierung relativ zur Schwerkraft bevorzugt, dass der Eingriffsabschnitt durch eine Feder in die Eingriffsstellung vorbelastet ist.

Ganz allgemein kann der Rastkörper durch eine gesondert vom Rastkörper ausgebildete Feder in die Eingriffsstellung vorbelastet sein. Eine vorteilhaft geringe Anzahl an zur Bildung der Luftfederbaugruppe benötigten Bauteilen kann jedoch dadurch erhalten werden, dass der Rastkörper eine Feder ist und der Eingriffsabschnitt ein Abschnitt der Feder ist. Somit kann ein Abschnitt der den Rastkörper bildenden Feder der Eingriffsabschnitt sein, welcher durch sich selbst oder/und einen mit ihm, vorzugsweise einstückig, zusammenhängenden weiteren Federabschnitt in die Eingriffsstellung vorbelastet ist. Die Eingriffsstellung ist dabei stets die Stellung, in welcher sich der Eingriffsabschnitt im Zusammenwirken mit der Rastausnehmung im Rasteingriff befindet.

Zur Erzielung einer betragsmäßig möglichst großen Tragkraft des Rasteingriffs kann eine Mehrzahl von Eingriffsabschnitten vorgesehen sein. Bevorzugt gilt dann für mehrere der Eingriffsabschnitte, besonders bevorzugt für alle Eingriffsabschnitte, das oben für den wenigstens einen Eingriffsabschnitt Gesagte.

Gemäß einer konstruktiv besonders einfachen und daher bevorzugten Ausgestaltung kann die Feder eine Bügelfeder mit zwei einander über einen Federspalt hinweg gegenüberliegenden und durch einen den Federspalt überbrückenden Federbügel miteinander verbundenen Federschenkeln sein. Bevorzugt ist an wenigstens einem Federschenkel wenigstens ein Eingriffsabschnitt, besonders bevorzugt an jedem der Federschenkel jeweils wenigstens ein Eingriffsabschnitt, ausgebildet. Eine solche Bügelfeder hat bevorzugt raumsparend eine grobschematisch U-förmige Gestalt, wobei die beiden im Wesentlichen parallelen Federschenkel durch den sie verbindenden Federbügel als Basisabschnitt voneinander weg oder aufeinander zu belastet sein können. In vorteilhafter Weise können durch eine solche Bügelfeder mit zwei einander gegenüberliegenden Federschenkeln auf jeder von zwei unterschiedlichen, vorzugsweise entgegengesetzten, Seiten des Kopplungsvorsprungs oder der Kopplungsausnehmung eine Vorbelastung von Eingriffsabschnitten in die Eingriffsstellung bewirkt werden. Auf jeder der zwei unterschiedlichen Seiten des Kopplungsvorsprungs liegt dabei je einer der zwei einander gegenüberliegenden Federschenkel.

Bevorzugt verlaufen die einander gegenüberliegenden Federschenkel, insbesondere die an ihnen ausgebildeten Eingriffsabschnitte des Rastkörpers, auf je einer anderen Seite der den Kopplungsvorsprung zentral durchsetzend gedachten virtuellen Vorsprungsbahn, und zwar bevorzugt in einer Richtung quer zur Vorsprungsbahn. Bevorzugt verlaufen die beiden Federschenkel, insbesondere mit den an ihnen ausgebildeten Eingriffsabschnitten, nicht nur auf je einer anderen Seite der Vorsprungsbahn, sondern auch auf einer jeweils anderen Seite des Kopplungsvorsprungs. Somit ist bevorzugt zwischen den Federschenkeln ein Abschnitt des Kopplungsvorsprungs angeordnet. Der Verlauf der Federschenkel quer zur Vorsprungsbahn erschwert oder verhindert eine Kraftwirkung längs der Federschenkel durch eine längs der Vorsprungsbahn wirkende Kraftquelle. Dies erhöht die Eingriffssicherheit des Rasteingriffs.

Ebenso verlaufen die einander gegenüberliegenden Federschenkel, insbesondere die an ihnen ausgebildeten Eingriffsabschnitte des Rastkörpers, auf je einer anderen Seite eines Abschnitts der Kopplungsausnehmung, sodass ein Abschnitt der Kopplungsausnehmung zwischen den Federschenkeln gelegen ist, wobei bei dieser bevorzugten Ausgestaltung der zwischen den Federschenkeln gelegene Abschnitt der Kopplungsausnehmung wenigstens teilweise, vorzugsweise größtenteils, aufgrund des Eingriffs des Kopplungsvorsprungs in die Kopplungsausnehmung mit Material des Kopplungsvorsprungs belegt ist.

Zur vorteilhaft selbsttätigen Einführung des Kopplungsvorsprungs in die Kopplungsausnehmung längs der Vorsprungsbahn bei Annäherung von Stützkörper und Luftbalghalterung aneinander kann vorgesehen sein, dass der Kopplungsvorsprung sich längs der Vorsprungsbahn in Richtung von der ihn tragenden Struktur weg verjüngend ausgebildet ist oder/und dass die Kopplungsausnehmung sich in Richtung zu einer Einführöffnung hin, durch welche hindurch der Kopplungsvorsprung im betriebsbereiten Zustand der Luftfederbaugruppe in die Kopplungsausnehmung eingreift, aufweitend ausgebildet ist.

Wenngleich für eine möglichst effektive Zentrierwirkung die Kopplungsausnehmung wenigstens abschnittsweise komplementär zum Kopplungsvorsprung ausgebildet sein kann, ist dies jedoch nicht notwendig. Bei einer zum in oben genannter Weise verjüngt ausgebildeten Kopplungsvorsprung komplementären Ausbildung der Kopplungsausnehmung findet ein Anlageeingriff zwischen einer Außenwand des Kopplungsvorsprungs und einer Innenwand der Kopplungsausnehmung statt. Es kann jedoch daran gedacht sein, die verjüngte Ausbildung des Kopplungsvorsprungs nur als Einführhilfe des Kopplungsvorsprungs in die Kopplungsausnehmung zu verwenden und einen Anlageeingriff, welche eine Bewegung des Stützkörpers längs der Vorsprungsbahn in Richtung auf die Luftbalghalterung zu körperlich verhindert, außerhalb der verjüngten Außenfläche des Kopplungsvorsprungs zu realisieren, um diese Außenfläche, im Betrieb zu entlasten. Daher kann die Kopplungsausnehmung zumindest in ihrem den Kopplungsvorsprung aufweisenden Abschnitt beispielsweise eine im Wesentlichen hohl-zylindrische Gestalt oder eine hohl-konische Gestalt mit größerem Konuswinkel als der Kopplungsvorsprung aufweisen, oder eine Kombination aus abschnittsweise dem einen und dem anderen.

Grundsätzlich können der Kopplungsvorsprung am Stützkörper und die Kopplungsausnehmung an der Luftbalghalterung vorgesehen sein. Die Luftbalghalterung ist in der Regel ein längliches Bauteil. Durch die grundsätzlich mögliche Ausbildung einer Kopplungsausnehmung an der Luftbalghalterung könnte diese jedoch lokal unerwünschte Schwächungen erfahren, zu deren Abmilderung oder gar Beseitigung zusätzlich Material an der Luftbalghalterung vorgesehen werden müsste. Ein geringeres Gesamtgewicht bei gleicher Funktionalität kann an der Luftbalghalterung, und insbesondere an der Luftfederbaugruppe insgesamt, deshalb dadurch erreicht werden, dass der Kopplungsvorsprung an der Luftbalghalterung und die Kopplungsausnehmung am Stützkörper vorgesehen ist. Der Stützkörper kann beispielsweise abschnittsweise hohl ausgebildet sein.

Der Kopplungsvorsprung kann an das ihn tragende Bauteil, insbesondere an die Luftbalghalterung, als gesondertes Bauteil anmontiert sein. Zur Vermeidung von Montagevorgängen bei gleichzeitiger Erzielung einer möglichst steifen und festen Luftbalghalterung ist der Kopplungsvorsprung bevorzugt einstückig mit der übrigen Luftbalghalterung ausgebildet, beispielsweise als Gussbauteil. Die Luftbalghalterung kann aus Gussstahl oder aus einer Aluminiumlegierung gebildet sein. Der Stützkörper kann ebenfalls aus Metall oder aus einem faserverstärkten Kunststoff gebildet sein.

Ebenso können grundsätzlich der Rastkörper am Kopplungsvorsprung und die Rastausnehmung am Stützkörper vorgesehen sein. Dann jedoch, wenn der Kopplungsvorsprung bei seiner Einführung in die Kopplungsausnehmung aufgrund seiner längs der Vorsprungsbahn verjüngten Gestalt zur Erzielung einer selbsttätigen Verrastung den wenigstens einen Eingriffsabschnitt gegen seine Vorbelastung aus der Eingriffsstellung verlagern können soll, ist es vorteilhaft, wenn der Rastkörper am Stützkörper und die Rastausnehmung am Kopplungsvorsprung vorgesehen ist. Denn dann ist eine die Verlagerung des wenigstens einen Eingriffsabschnitts aus der Eingriffsstellung bewirkende Relativbewegung von Kopplungsvorsprung und Rastkörper besonders einfach möglich.

Der Stützkörper kann zur Erzielung eines möglichst formstabilen Stützkörpers mit möglichst geringem Gewicht einen inneren Körperabschnitt mit der Kopplungsausnehmung und einen den inneren Körperabschnitt umgebenden äußeren Körperabschnitt aufweisen. Das möglichst geringe Gewicht des Stützkörpers kann insbesondere dadurch angestrebt werden, dass der innere oder/und der äußere Körperabschnitt ein Hülsenabschnitt ist bzw. sind. Bevorzugt sind beide Körperabschnitte Hülsenabschnitte, besonders bevorzugt koaxiale Hülsenabschnitte.

Der innere oder/und der äußere Hülsenabschnitt kann bzw. können zylindrisch oder konisch ausgebildet sein. Der vom inneren Hülsenabschnitt umgebene Hohlraum kann die Kopplungsausnehmung bilden. Bevorzugt umgibt im betriebsbereiten Zustand der Luftfederbaugruppe ein Axialbereich des inneren Hülsenabschnitts einen Abschnitt des in den Hülsenabschnitt eingreifenden Kopplungsvorsprungs in Richtung orthogonal zur Vorsprungsbahn spielfrei, sodass durch die körperliche Anlage des inneren Hülsenabschnitts am Kopplungsvorsprung eine Relativbewegung von Stützbauteil und Luftbalghalterung orthogonal zur Vorsprungsbahn nicht nur begrenzt, sondern bevorzugt verhindert ist.

Zum Schutz des einmal hergestellten Rasteingriffs können der Rastkörper und die Rastausnehmung im betriebsbereiten Zustand der Luftfederbaugruppe durch einen Abschnitt des Stützkörpers umgeben sein. Somit kann der Rasteingriff in einem gewissen Maß vor äußeren Einflüssen abgeschirmt sein. Gemäß der oben beschriebenen vorteilhaften Ausgestaltung kann der äußere Körperabschnitt, insbesondere als Hülsenabschnitt, den Rastkörper und die Rastausnehmung umgeben.

Wenngleich der Rasteingriff bevorzugt in obigem Sinne bevorzugt ein nicht-überwindbarer Rasteingriff ist, ist für Zwecke der Wartung und der Reparatur erfindungsgemäß vorgesehen, dass der Rastkörper von der übrigen Luftfederbaugruppe in einer Richtung quer zur Vorsprungsbahn von der übrigen Luftfederbaugruppe entfernbar ist, da eine im Betrieb häufig auftretende Last längs der Vorsprungsbahn nicht oder nur in geringem betragsmäßigem Umfang zu einer Last quer zur Vorsprungsbahn führt, welche eine unbeabsichtigte Entfernung des Rastkörpers von der übrigen Luftfederbaugruppe bewirken könnte.

In dem oben beschriebenen bevorzugten Fall der Verwendung einer Bügelfeder als Rastkörper ist der Rastkörper bevorzugt in einer Richtung quer zur Vorsprungsbahn sowohl von der Kopplungsausnehmung als auch von dem in die Kopplungsausnehmung eingreifenden Kopplungsvorsprung abziehbar. Bevorzugt ist die Abzugsrichtung, längs welcher der Rastkörper von der übrigen Luftfederbaugruppe, insbesondere von der Kopplungsausnehmung und vom Kopplungsvorsprung, abziehbar ist, quer, insbesondere orthogonal, zu der Richtung, in welche der wenigstens eine Federschenkel, vorzugsweise beide Federschenkel, mit den daran ausgebildeten Eingriffsabschnitten, in die Eingriffsstellung vorgespannt ist bzw. sind. Dadurch bleibt der Rasteingriff beim Abziehen des Rastkörpers in Gestalt der Bügelfeder von der übrigen Luftfederbaugruppe möglichst lange erhalten. Die Abzugsrichtung der Bügelfeder verläuft vorzugsweise parallel zu den beiden Federschenkeln oder, falls die beiden Federschenkel nicht parallel zueinander ausgerichtet sind, längs einer Winkelhalbierenden des von den beiden Federschenkeln eingeschlossenen Winkels.

Die Richtung der Vorbelastung eines an einem Federschenkel ausgebildeten Eingriffsabschnitts verläuft bevorzugt in Richtung zum gegenüberliegenden Federschenkel hin bzw. von diesem weg, je nachdem, an welchem Bauteil die Bügelfeder als der Rastkörper getragen ist und welches andere Bauteil mit dem wenigstens einen Eingriffsabschnitt in Rasteingriff stehen soll.

Um zu vermeiden, dass eine Betätigung der Bügelfeder in einer der möglichen Bewegungsrichtungen aus Abzugsrichtung der Bügelfeder und Verlagerungsrichtung des wenigstens einen Eingriffsabschnitts in dessen Eingriffsstellung oder aus dieser heraus eine Betätigung der Bügelfeder in der jeweils anderen Richtung verursacht, schließen bevorzugt die Abzugsrichtung und die Verlagerungsrichtung bzw. die ihr entsprechende Vorbelastungsrichtung wenigstens eines Eingriffsabschnitts einen Winkel in einem Bereich von 70° bis 110°, besonders bevorzugt von 80° bis 100° ein.

Dann, wenn die Kopplungsausnehmung mit dem in sie eingreifenden Kopplungsvorsprung von einem oben genannten äußeren Hülsenabschnitt des Stützkörpers umgeben ist, sind vorzugsweise der radiale Abstand des äußeren Hülsenabschnitts von der Kopplungsausnehmung, insbesondere von dem sie bevorzugt ausbildenden inneren Hülsenabschnitt und die Länge der Bügelfeder derart bemessen, dass die Bügelfeder innerhalb des vom äußeren Hülsenabschnitts umgebenen Raum von der übrigen Luftfederbaugruppe abgezogen werden kann. Dies ermöglicht ein Abziehen der Bügelfeder ohne übermäßige Verformung der Bügelfeder.

Die vorliegende Erfindung betrifft ebenfalls eine Starrachse für ein Nutzfahrzeug, insbesondere für einen Lastkraftwagen, umfassend einen sich längs einer Achsrichtung erstreckenden Achskörper und mit wenigstens einer Luftfederbaugruppe, wie sie oben beschrieben und weitergebildet ist, wobei von dem Achskörper quer zur Achsrichtung wenigstens eine Luftbalghalterung der Luftfederbaugruppe absteht.

Die vorliegende Erfindung wird nachfolgend anhand der beiliegenden Zeichnungen näher erläutert. Es stellt dar:
- Fig. 1: eine grobschematische Ansicht entlang der Achsrichtung einer in ihrer Quermitte geschnittenen Starrachse des Standes der Technik mit einer zur Achsrichtung der Starrachse orthogonalen Schnittebene,
- Fig. 2: eine grobschematische Seitenansicht entlang der Achsrichtung einer erfindungsgemäßen Starrachse,
- Fig. 3: eine grobschematische Schnittansicht einer erfindungsgemäßen Luftfederbaugruppe, montiert an einen nur grobschematisch angedeuteten Achskörper der Starrachse von Figur 2, in einer zur Achsrichtung der Starrachse orthogonalen Schnittebene,
- Fig. 4: eine grobschematische Schnittansicht der Lupenvergrößerung IV-IV von Figur 3, und
- Fig. 5: eine grobschematische Schnittansicht entlang der Schnittebene V-V in Figur 4.

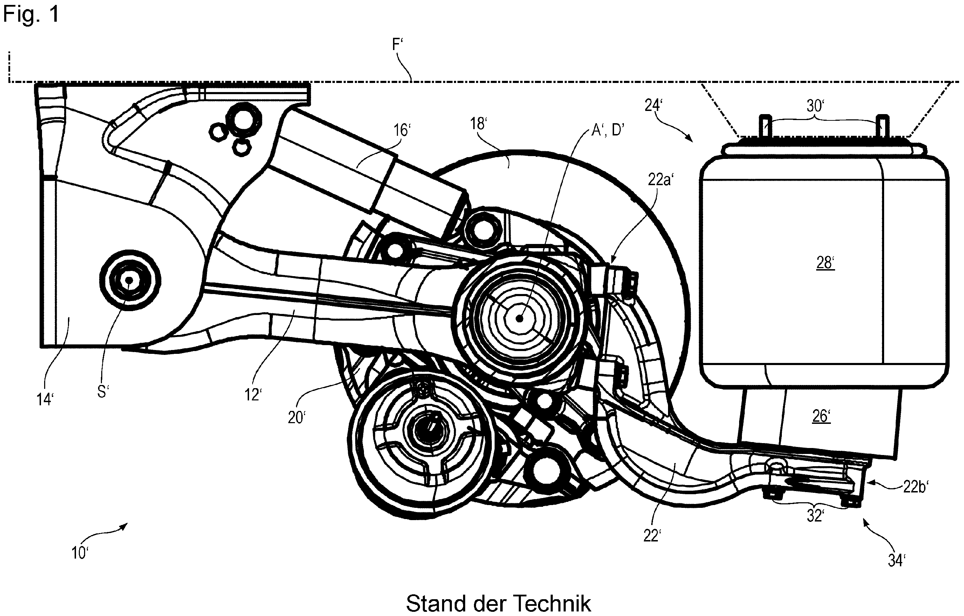

In Figur 1 ist eine Starrachse des Standes der Technik allgemein mit 10' bezeichnet. Die Starrachse 10' ist, wie bei Starrachsen üblich, spiegelbildlich zu einer vertikalen Längsmittelebene ausgebildet. Eine vertikale Längsmittelebene in einem betriebsbereit an einem Fahrzeug montierten Zustand verläuft parallel zur Rollachse und parallel zur Gierachse sowie orthogonal zur Nickachse des Fahrzeugs. In Figur 1 blickt der Betrachter auf den hinter einer zur vertikalen Längsmittelebene parallelen Schnittebene gelegenen Teil der Starrachse 10'.

Der sich längs der zur Zeichenebene von Figur 1 orthogonalen sowie zur Nickachse eines die Starrachse 10' tragenden Fahrzeugs parallelen Achsrichtung A' erstreckende Achskörper 12' ist an einem Lagerbock 14' um eine zur Achsrichtung A' parallele Schwenkachse S' schwenkbar gelagert. Ein Dämpfer 16' ist mit seinem einen Ende am Lagerbock 14' und mit seinem anderen Ende am Achskörper 12' angelenkt. Der Dämpfer 16' dämpft eine Schwenkbewegung des Achskörper 12' um die Schwenkachse S'.

Im Hintergrund von Figur 1 ist eine um die durch die Starrachse 10' definierte Raddrehachse D' konzentrisch angeordnete Bremsscheibe 18' und ein mit der Bremsscheibe 18' zusammenwirkender, die Bremsscheibe 18' umgreifender Bremssattel 20' zu erkennen.

Auf der vom Lagerbock 14' abgewandten Seite des Achskörper 12' ist eine herkömmliche Luftbalghalterung 22' mit ihrem Montageende 22a' angeschraubt. An dem dem Montageende 22a' entgegengesetzten Tragende 22b' der Luftbalghalterung 22' ist eine Luftbalgbaugruppe 24' festgelegt. Die Luftbalgbaugruppe 24' umfasst einen Stützkörper 26' und einen Luftbalg 28'.

Der Luftbalg 28' ist an seinem vom Tragende 22b' bzw. vom Stützkörper 26' fernliegenden Ende durch beispielsweise zwei Gewindestifte 30' mit einem lediglich strichpunktiert angedeuteten Fahrzeugrahmen F' verbindbar bzw. verbunden.

Der Stützkörper 26' ist an seinem vom Luftbalg 28' fernliegenden Längsende durch beispielsweise zwei Schrauben 32' mit dem Tragende 22b' fest verbunden.

Die Luftbalghalterung 22' und die Luftbalgbaugruppe 24' bilden gemeinsam eine Luftfederbaugruppe 34'.

Die Herstellung dieser festen Verbindung des Stützkörpers 26' mit dem Tragende 22b' durch die Schrauben 32' ist umständlich und kann durch die vorliegende Erfindung erheblich vereinfacht werden.

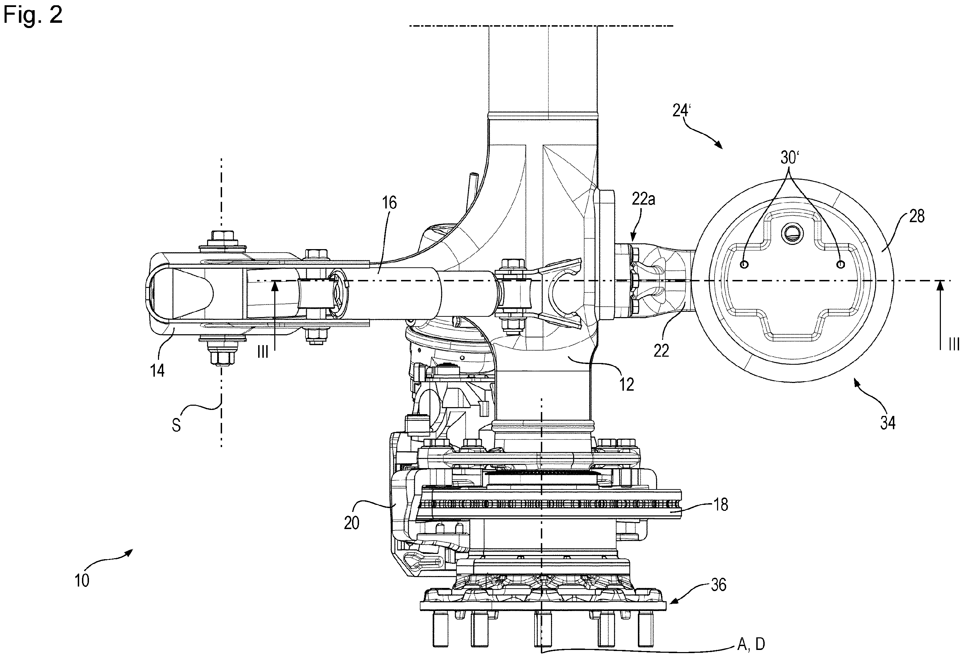

In Figur 2 ist in grobschematischer Draufsicht eine erfindungsgemäße Starrachse 10 dargestellt, genauer ihre eine Hälfte, welche bis zu der zur Gierachse und zur Rollachse des die Starrachse 10 tragenden Fahrzeugs parallelen bzw. zur Achsrichtung A orthogonalen Spiegelsymmetrieebene SE reicht. Zu dieser Spiegelsymmetrieebene SE ist die Starrachse 10 spiegelsymmetrisch.

Gleiche und funktionsgleiche Bauteile und Bauteilabschnitte wie in Figur 1 sind in den eine erfindungsgemäße Ausführungsform betreffenden Figuren 2 bis 5 mit gleichen Bezugszeichen, jedoch ohne Apostroph, bezeichnet.

In Figur 2 ist zusätzlich zu den bereits aus Figur 1 bekannten Bauteilen auf der vom Achskörper 12 abgewandten Seite der Bremsscheibe 18 ein Radflansch 36 zu erkennen, an welchen ein Rad, genauer eine Radfelge, durch Radmuttern in an sich bekannter Weise festlegbar ist.

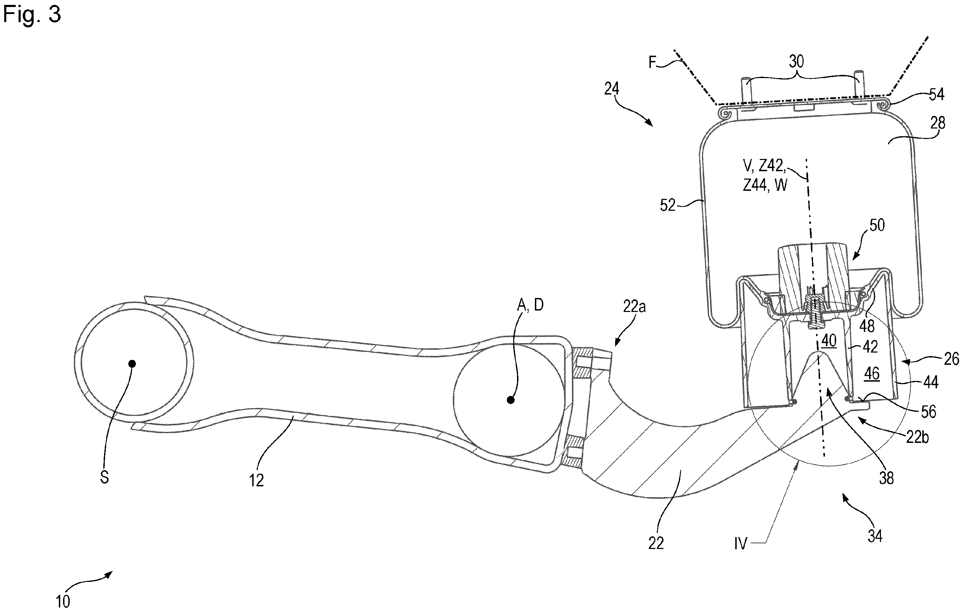

In Figur 3 ist eine grobschematische Schnittansicht in der Schnittebene III-III von Figur 2 durch den Achskörper 12 und die in Montageposition daran angehaltene Luftbalghalterung 22 mit daran durch Rasteingriff festgelegter Luftbalgbaugruppe 24 dargestellt. Der Achskörper 12 ist lediglich vereinfacht dargestellt, beispielsweise ohne die Festlegeformation für das am Achskörper 12 festzulegende Längsende des Dämpfers 16. Auf den Achskörper 12 kommt es vorliegend nicht an. Figur 3 soll vor allem die Konstruktion der Luftfederbaugruppe 34 darstellen.

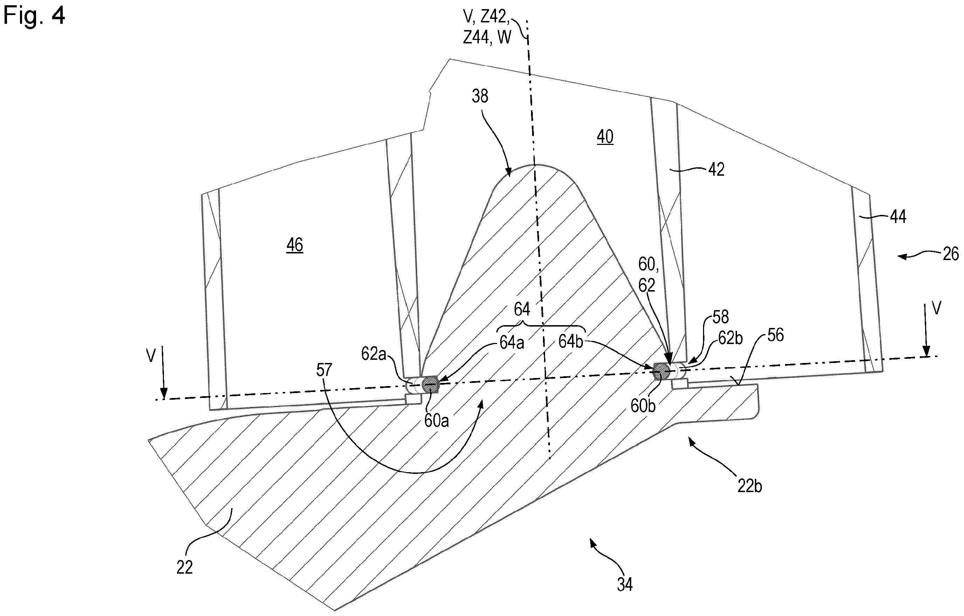

Am Tragende 22b ist einstückig mit der übrigen Luftbalghalterung 22 von letzterer längs einer Vorsprungsbahn V auskragend ein Kopplungsvorsprung 38 ausgebildet. Der Kopplungsvorsprung 38 wird weiter unten im Zusammenhang mit der Lupenvergrößerung von Figur 4 näher erläutert werden.

Der Kopplungsvorsprung 38 ragt in eine Kopplungsausnehmung 40, welche definiert ist durch einen inneren Hülsenabschnitt 42 des Stützkörpers 26. Der innere Hülsenabschnitt 42 ist ein im Wesentlichen zylindrischer Hülsenabschnitt, dessen Zylinderachse Z42 mit der Vorsprungsbahn V kollinear ist.

Vorliegend ist die Vorsprungsbahn V eine geradlinige Vorsprungsachse V.

Der innere Hülsenabschnitt 42 ist von einem äußeren Hülsenabschnitt 44 umgeben, der ebenfalls ein im Wesentlichen zylindrischer Hülsenabschnitt ist. Die Zylinderachse Z44 des äußeren Hülsenabschnitts 44 ist im dargestellten Beispiel kollinear mit der Zylinderachse Z42 und mit der Vorsprungsbahn V. Zwischen dem inneren Hülsenabschnitt 42 und dem äußeren Hülsenabschnitt 44 befindet sich ein luftgefüllter Hohlraum 46, welcher auf der vom Luftbalg 28 weg weisenden Seite offen ist.

An ihren dem Luftbalg 28 nähergelegenen axialen Längsenden enden die Hülsenabschnitte 42 und 44 in einem gemeinsamen Boden 48, welcher im dargestellten Beispiel im Wesentlichen kegelstumpfförmig ausgebildet ist. Der sich in Richtung zum Luftbalg 28 hin aufweitende Boden 48 dient zusammen mit einem Klemmklotz 50 der an sich bekannten Festlegung einer elastischen Haut 52 des Luftbalgs 28. An dem vom Stützkörper 26 fernliegenden Längsende des Luftbalgs 28 ist eine Kopfplatte 54 angeordnet, welche im Elastomer-Material der elastischen Haut 52 des Luftbalgs 28 formschlüssig verankert ist. Die Kopfplatte 54 trägt die zuvor erwähnten Gewindestifte 30, mit welchem der Luftbalg 28 und die Luftbalgbaugruppe 24 insgesamt am Fahrzeugrahmen F festgelegt werden können.

Im Betrieb der Luftfederbaugruppe 34 wirkt der Luftbalg 28 als Luftfeder, sodass sich die Kopfplatte 54 und der Stützkörper 26 einander längs einer mit der Vorsprungsbahn V im Wesentlichen zusammenfallenden Federbahn W annähern und voneinander entfernen können. Auch können sich die Kopfplatte 54 und der Stützkörper 26 relativ zueinander um eine zur Federbahn W orthogonale, insbesondere zur Achsrichtung A parallele Verdrehachse verdrehen. Für eine Kompression und Expansion des Luftbalgs 28 wird die elastische Haut 52 in an sich bekannter Weise gewalkt, bevorzugt in Umfangsrichtung um die Federbahn W möglichst gleichmäßig gewalkt.

Anders als die Befestigungslösung des Standes der Technik von Figur 1 ist der Stützkörper 26 der Luftfederbaugruppe 34 der Figuren 2 und 3 nicht mit der Luftbalghalterung 22 verschraubt, sondern mit dieser verrastet. Trotz der Verrastung ist der Stützkörper 26 spielfrei an der Luftbalghalterung 22 festgelegt, d. h. er kann nicht weiter an die Luftbalghalterung 22 angenähert und nicht von ihr entfernt werden. Da die innere Hülsenanordnung 42 am Kopplungsvorsprung 38 um die Vorsprungsbahn V umlaufend anliegt, ist der Stützkörper 26 auch orthogonal zur Vorsprungsbahn V relativ zur Luftbalghalterung 22 translatorisch nicht bewegbar.

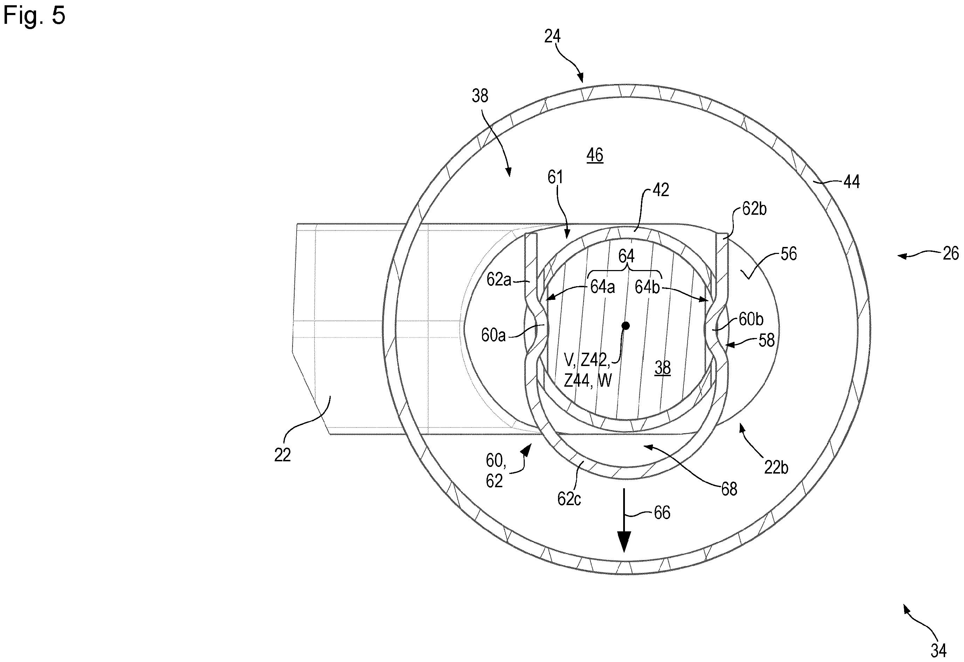

Ein vorteilhaftes konstruktives Beispiel für die Ausgestaltung der Befestigung des Stützkörpers 26 an der Luftbalghalterung 22 wird nachfolgend anhand der Figuren 4 und 5 erläutert. Figur 4 zeigt den in der Lupe IV von Figur 3 enthaltenen Ausschnitt der Luftfederbaugruppe 34 vergrößert. Figur 5 zeigt einen Schnitt der Luftfederbaugruppe 34 längs der Schnittebene V-V in Figur 4.

Der Kopplungsvorsprung 38 im dargestellten Ausführungsbeispiel ist umgeben von einer bevorzugt ebenen Anlagefläche 56, welche einstückig an der Luftbalghalterung 22 ausgebildet ist. An dieser Anlagefläche 56 liegt der innere Hülsenabschnitt 42 mit seiner vom Boden 48 fernliegenden, eine Einführöffnung 57 des inneren Hülsenabschnitts 42 umgebenden Stirnfläche körperlich an. Der innere Hülsenabschnitt 42 steht im dargestellten Ausführungsbeispiel axial geringfügig über den äußeren Hülsenabschnitt 44 vor. Dies muss jedoch nicht so sein.

Der innere Hülsenabschnitt 42 weist zwei bezüglich der Zylinderachse Z42 des inneren Hülsenabschnitts 42 einander diametral gegenüberliegende Halteöffnungen 58 auf, in welchen ein Rastkörper 60 in Gestalt einer Bügelfeder 62 aufgenommen ist (siehe auch Figur 5). Die Halteöffnungen 58, von welchen zur besseren Übersichtlichkeit in den Figuren nur eine mit Bezugszeichen versehen ist, können beispielsweise als einfache Schlitze ausgebildet sein. Bevorzugt verlaufen diese Schlitze quer zur Vorsprungsbahn V bzw. quer zur Zylinderachse Z42.

Die U-förmige Bügelfeder 62 als der Rastkörper 60 weist zwei im Wesentlichen parallele Federschenkel 62a und 62b auf, welche durch einen den Federspalt 61 zwischen den Federschenkeln 62a und 62b überbrückenden Federbügel 62c miteinander verbunden sind. Ein auf den jeweils gegenüberliegenden Federschenkel zu gekrümmter und ausgebauchter Abschnitt der Federschenkel 62a und 62b ist ein Eingriffsabschnitt 60a bzw. 60b am Rastkörper 60, welcher in eine Rastausnehmung 64 in der Luftbalghalterung 22 und dort bevorzugt im Kopplungsvorsprung 38 eingreift. Die Federschenkel 62a und 62b und damit die Eingriffsabschnitte 60a bzw. 60b sind vorliegend durch den Federbügel 62c, quer zur Vorsprungsbahn V bzw. zur Zylinderachse Z42, aufeinander zu vorgespannt.

Die Rastausnehmung 64 umfasst zwei im Wesentlichen parallele, quer und insbesondere orthogonal zur Vorsprungsbahn V verlaufende Nuten 64a bzw. 64b im Kopplungsvorsprung 38, in welche die Eingriffsabschnitte 60a bzw. 60b in ihrer in den Figuren 4 und 5 gezeigten Eingriffsstellung einragen.

Gegen die Vorspannung des Federbügels 62c können die Eingriffsabschnitte 60a bzw. 60b durch den Kopplungsvorsprung 38 bei der Montage der Luftfederbaugruppe 34 durch dessen sich längs der Vorsprungsbahn V verjüngende Gestalt mit der Einführbewegung des Kopplungsvorsprungs 38 längs der virtuellen Vorsprungsbahn V in die Kopplungsausnehmung 40 aus der Eingriffsstellung verlagert werden, bis die Rastausnehmung 64 in Gestalt der beiden Nuten 64a bzw. 64b mit den Eingriffsabschnitten 60a bzw. 60b fluchtet und so die Eingriffsabschnitte 60a bzw. 60b unter der Vorbelastung durch den Federbügel 62c sich selbsttätig in die ihnen jeweils zugeordnete Nut 64a bzw. 64b hinein zurück in ihre Eingriffsstellung bewegen.

Zur Montage der Luftfederbaugruppe 34 reicht es dann aus, von den zunächst voneinander gesondert vorliegenden Bauteilen: Luftbalghalterung 22 und Luftbalgbaugruppe 24, die Luftbalghalterung 22 mit dem Achskörper 12 zu verschrauben und die Luftbalgbaugruppe 24 mittels der Gewindestifte 30 mit dem Fahrzeugrahmen F zu verschrauben. Wenn dann der Achskörper 12, welcher über den im Zusammenhang mit Fig. 1 erläuterten Lagerbock 14 ebenfalls mit dem Fahrzeugrahmen F verbunden ist, mit den am Achskörper 12 befestigten Fahrzeugrädern auf einem festen Untergrund aufgesetzt wird, bewegt sich der Kopplungsvorsprung 38 um die Schwenkachse S (s. Fig. 3) relativ zum Fahrzeugrahmen F auf diesen zu. Dabei dient die sich verjüngende Oberfläche des Kopplungsvorsprungs 38 als Einführhilfe, um den Kopplungsvorsprung 38 in die Kopplungsausnehmung 40 einzuführen. Während dieser Einführbewegung werden, getrieben durch die Gewichtskraft des Fahrzeugrahmens F, die Eingriffsabschnitte 60a bzw. 60b wie oben beschrieben aus ihrer Eingriffsstellung verlagert, bis sie durch entsprechende räumliche Anordnung der Rastausnehmung 64 sich zurück in ihre Eingriffsstellung verlagern können, wodurch der Rasteingriff des Rastkörpers 60 mit der Rastausnehmung 64 ohne Werkzeugangriff an der Luftfederbaugruppe 34 hergestellt wird.

Der Rastkörper 60 kann in der in Figur 5 gezeigten Pfeilrichtung 66 quer zur Vorsprungsbahn V und quer zur Vorbelastungsrichtung der Eingriffsabschnitte 60a und 60b aufeinander zu von dem Stützkörper 26 und dem Kopplungsvorsprung 38 abgezogen werden. Hierzu kann ein Werkzeug, wie beispielsweise ein Schraubendreher oder eine beliebige andere Metallstange, in die vom Federbügel 62c gebildete Öse 68 als Hebel eingeführt und mit diesem unter Anlage an einen Abschnitt der als Gussbauteil massiven Luftbalghalterung 22 die Bügelfeder 62 längs des Pfeils 66 ausgetrieben werden. Dadurch ist die Luftbalgbaugruppe 24 von der Luftbalghalterung 22 für Zwecke der Reparatur und Wartung trennbar.

Für eine erneute Kopplung der Luftbalghalterung 22 mit der Luftbalgbaugruppe 24 genügt die Anordnung einer Bügelfeder 62 in den Halteöffnungen 58, um die oben geschilderte selbsttätige, werkzeugfreie Kopplung der Luftbalghalterung 22 mit der Luftbalgbaugruppe 24 zu wiederholen.

## Patentansprüche

1. Luftfederbaugruppe (34) für eine Starrachse (10) eines Nutzkraftwagens, umfassend eine Luftbalghalterung (22) und eine im betriebsbereiten Zustand der Luftfederbaugruppe (34) an der Luftbalghalterung (22) abgestützte Luftbalgbaugruppe (24), wobei die Luftbalgbaugruppe (24) einen bestimmungsgemäß formveränderlichen Luftfederbalg (28) und einen mit dem Luftfederbalg (28) verbundenen Stützkörper (26) aufweist, wobei ein Bauteil aus Luftbalghalterung (22) und Stützkörper (26) einen längs einer virtuellen Vorsprungsbahn (V) abstehenden Kopplungsvorsprung (38) aufweist, welcher im betriebsbereiten Zustand der Luftfederbaugruppe (34) in eine am jeweils anderen Bauteil aus Luftbalghalterung (22) und Stützkörper (26) ausgebildete Kopplungsausnehmung (40) längs der Vorsprungsbahn (V) eingreift, wobei im betriebsbereiten Zustand der Luftfederbaugruppe (34) eine translatorische Relativbewegung des Stützkörpers (26) relativ zur Luftbalghalterung (22) orthogonal zur Vorsprungsbahn (V) und in einer Richtung längs der Vorsprungsbahn (V) körperlich begrenzt ist, wobei ein Bauteil aus Luftbalghalterung (22) und Stützkörper (26) einen Rastkörper (60) und das jeweils andere Bauteil aus Luftbalghalterung (22) und Stützkörper (26) eine Rastausnehmung (64) derart aufweisen, dass im betriebsbereiten Zustand der Luftfederbaugruppe (34) der Rastkörper (60) in formschlüssigem Rasteingriff mit der Rastausnehmung (64) steht, so dass eine translatorische Relativbewegung des Stützkörpers (26) relativ zur Luftbalghalterung (22) in beiden entgegengesetzten Richtungen längs der Vorsprungsbahn (V) körperlich begrenzt ist,
**dadurch gekennzeichnet, dass** der Rastkörper (60) von der übrigen Luftfederbaugruppe (34) in einer Richtung quer zur Vorsprungsbahn (V) entfernbar ist.

2. Luftfederbaugruppe (34) nach Anspruch 1,
**dadurch gekennzeichnet, dass** der Rasteingriff ein nicht-überwindbarer Rasteingriff ist.

3. Luftfederbaugruppe (34) nach Anspruch 1 oder 2,
**dadurch gekennzeichnet, dass** zumindest vor einem Einführen des Kopplungsvorsprungs (38) in die Kopplungsausnehmung (40) und somit vor Herstellung des Rasteingriffs zumindest ein zum unmittelbaren Formschlusseingriff mit der Rastausnehmung (40) ausgebildeter Eingriffsabschnitt (60a, 60b) des Rastkörpers (60) in seine Eingriffsstellung vorbelastet und gegen diese Vorbelastung aus der Eingriffsstellung verlagerbar ist.

4. Luftfederbaugruppe (34) nach Anspruch 3,
**dadurch gekennzeichnet, dass** der Eingriffsabschnitt (60a, 60b) durch eine Feder (62) in die Eingriffsstellung vorbelastet ist.

5. Luftfederbaugruppe (34) nach Anspruch 4,
**dadurch gekennzeichnet, dass** der Rastkörper (60) eine Feder (62) ist und der Eingriffsabschnitt (60a, 60b) ein Abschnitt der Feder (62) ist.

6. Luftfederbaugruppe (34) nach Anspruch 4 oder 5,
**dadurch gekennzeichnet, dass** die Feder (62) eine Bügelfeder (62) mit zwei einander über einen Federspalt (61) hinweg gegenüberliegenden und durch einen Federbügel (62c) miteinander verbundenen Federschenkeln (62a, 62b) ist, wobei an jedem der Federschenkel (62a, 62b) je wenigstens ein Eingriffsabschnitt (60a, 60b) ausgebildet ist.

7. Luftfederbaugruppe (34) nach Anspruch 6,
**dadurch gekennzeichnet, dass** die Bügelfeder (62) als der Rastkörper (60) in einer Richtung quer zur Vorsprungsbahn (V) sowohl von der Kopplungsausnehmung (40) als auch von dem in die Kopplungsausnehmung (40) eingreifenden Kopplungsvorsprung (38) abziehbar ist.

8. Luftfederbaugruppe (34) nach einem der vorhergehenden Ansprüche,
**dadurch gekennzeichnet, dass** der Kopplungsvorsprung (38) sich längs der Vorsprungsbahn (V) in Richtung von der ihn tragenden Struktur weg verjüngend ausgebildet ist oder/und dass die Kopplungsausnehmung (40) sich in Richtung zu einer Einführöffnung (57) hin, durch welche hindurch der Kopplungsvorsprung (38) im betriebsbereiten Zustand der Luftfederbaugruppe (34) in die Kopplungsausnehmung (40) eingreift, aufweitend ausgebildet ist.

9. Luftfederbaugruppe (34) nach einem der vorhergehenden Ansprüche,
**dadurch gekennzeichnet, dass** der Kopplungsvorsprung (38) an der Luftbalghalterung (22) und die Kopplungsausnehmung (40) am Stützkörper (26) ausgebildet ist.

10. Luftfederbaugruppe (34) nach einem der vorhergehenden Ansprüche,
**dadurch gekennzeichnet, dass** der Rastkörper (60) am Stützkörper (26) und die Rastausnehmung (64) am Kopplungsvorsprung (38) vorgesehen ist.

11. Luftfederbaugruppe (34) nach einem der vorhergehenden Ansprüche,
**dadurch gekennzeichnet, dass** der Stützkörper (26) einen inneren Körperabschnitt (42) mit der Kopplungsausnehmung (40) und einen den inneren Körperabschnitt (42) umgebenden äußeren Körperabschnitt (44) aufweist.

12. Luftfederbaugruppe (34) nach Anspruch 11,
**dadurch gekennzeichnet, dass** der innere (42) oder/und der äußere Körperabschnitt (44) ein Hülsenabschnitt (42, 44) ist bzw. sind.

13. Luftfederbaugruppe (34) nach einem der vorhergehenden Ansprüche,
**dadurch gekennzeichnet, dass** der Rastkörper (60) und die Rastausnehmung (64) im betriebsbereiten Zustand der Luftfederbaugruppe (34) durch einen Abschnitt des Stützkörpers (26) umgeben sind.

14. Starrachse (10) für ein Nutzfahrzeug, umfassend einen sich längs einer Achsrichtung (A) erstreckenden Achskörper (12) und mit wenigstens einer Luftfederbaugruppe (34) nach einem der vorhergehenden Ansprüche, wobei von dem Achskörper (12) quer zur Achsrichtung (A) wenigstens eine Luftbalghalterung (22) absteht.

## Claims

1. An air-suspension module (34) for a rigid axle (10) of a commercial motor vehicle, comprising an air-bellows mount (22) and an air-bellows module (24) supported on the air-bellows mount (22) in the operational state of the air-suspension module (34), the air-bellows module (24) having an air-suspension bellows (28) designed to change its shape and a supporting body (26) connected to the air-suspension bellows (28), one of the components of the air-bellows mount (22) and the supporting body (26) having a coupling projection (38) protruding along a virtual projection path (V), which in the operational state of the air-suspension module (34) engages with a coupling recess (40) formed on the respectively other component of the air-bellows mount (22) and the supporting body (26) along the projection path (V), a translatory relative movement of the supporting body (26), in the operational state of the air-suspension module (34), being physically limited relative to the air-bellows mount (22), orthogonally with respect to the projection path (V) and in a direction along the projection path (V),
wherein one of the components of the air-bellows mount (22) and the supporting body (26) has a latching body (60) and the respectively other component of the air-bellows mount (22) and the supporting body (26) has a latching recess (64) such that in the operational state of the air-suspension module (34) the latching body (60) is in a form-locking latching engagement with the latching recess (64), so that a translatory relative movement of the supporting body (26) relative to the air-bellows mount (22) is physically limited in the two opposite directions along the projection path (V),
**characterized in that** the latching body (60) is removable from the remaining air-suspension module (34) in a direction transverse to the projection path (V).

2. The air-suspension module (34) as recited in Claim 1,
**characterized in that** the latching engagement is an insuperable latching engagement.

3. The air-suspension module (34) as recited in Claim 1 or 2,
**characterized in that** at least prior to an insertion of the coupling projection (38) into the coupling recess (40) and thus prior to establishing the latching engagement, at least an engagement section (60a, 60b) of the latching body (60), designed for the direct form-locking engagement with the latching recess (40), is preloaded towards its engagement position and is displaceable from the engagement position against this preload.

4. The air-suspension module (34) as recited in Claim 3,
**characterized in that** the engagement section (60a, 60b) is preloaded by a spring (62) towards the engagement position.

5. The air-suspension module (34) as recited in Claim 4,
**characterized in that** the latching body (60) is a spring (62) and the engagement section (60a, 60b) is a section of the spring (62).

6. The air-suspension module (34) as recited in Claim 4 or 5,
**characterized in that** the spring (62) is a bow spring (62) having two spring legs (62a, 62b) situated opposite each other across a spring gap (61) and connected to each other by a spring bow (62c), at least one engagement section (60a, 60b) being formed on each of the spring legs (62a, 62b).

7. The air-suspension module (34) as recited in Claim 6,
**characterized in that** the bow spring (62) as the latching body (60) is retractable in a direction transverse to the projection path (V) from the coupling recess (40) as well es from the coupling projection (38) engaging into the coupling recess (40).

8. The air-suspension module (34) as recited in one of the preceding claims,
**characterized in that** the coupling projection (38) is tapered along the projection path (V) in the direction away from its supporting structure and/or the coupling recess (40) widens in the direction toward an insertion opening (57), through which the coupling projection (38) engages into the coupling recess (40) in the operational state of the air-suspension module (34).

9. The air-suspension module (34) as recited in one of the preceding claims,
**characterized in that** herein the coupling projection (38) is formed on the air-bellows mount (22) and the coupling recess (40) is formed on the supporting body (26).

10. The air-suspension module (34) as recited in one of the preceding claims,
**characterized in that** the latching body (60) is provided on the supporting body (26) and the latching recess (64) is provided on the coupling projection (38).

11. The air-suspension module (34) as recited in one of the preceding claims,
**characterized in that** the supporting body (26) has an inner body section (42) including the coupling recess (40) and an outer body section (44) surrounding the inner body section (42).

12. The air-suspension module (34) as recited in Claim 10,
**characterized in that** the inner body section (42) and/or the outer body section (44) are sleeve sections (42, 44).

13. The air-suspension module (34) as recited in one of the preceding claims,
**characterized in that** the latching body (60) and the latching recess (64) are surrounded by a section of the supporting body (26) in the operational state of the air-suspension module (34).

14. A rigid axle (10) for a commercial vehicle, comprising an axle body (12) extending along an axle direction (A) and having at least one air-suspension module (34) as recited in one of the preceding claims, at least one air-bellows mount (22) protruding from the axle body (12) transverse to the axle direction (A).

## Revendications

1. Ensemble de ressort pneumatique (34) pour un essieu rigide (10) d'un véhicule utilitaire, comprenant un support de soufflet pneumatique (22) et un ensemble de soufflet pneumatique (24) appuyé sur le support de soufflet pneumatique (22) lorsque l'ensemble de ressort pneumatique (34) est en état opérationnel, dans lequel l'ensemble de soufflet pneumatique (24) présente un soufflet de ressort pneumatique (28) dont la forme est modifiable conformément à sa destination et un corps d'appui (26) relié au soufflet de ressort pneumatique (28), dans lequel un composant parmi le support de soufflet pneumatique (22) et le corps d'appui (26) présente une saillie d'accouplement (38) faisant saillie le long d'une voie de saillie virtuelle (V), laquelle s'engage, à l'état opérationnel de l'ensemble de ressort pneumatique (34), dans un évidement d'accouplement (40) formé sur l'autre composant respectif parmi le support de soufflet pneumatique (22) et le corps d'appui (26), le long de la voie de saillie (V), dans lequel à l'état opérationnel de l'ensemble de ressort pneumatique (34) un mouvement relatif de translation du corps d'appui (26) par rapport au support de soufflet pneumatique (22) orthogonal à la voie de saillie (V) et dans une direction le long de la voie de saillie (V) est limité physiquement, dans lequel un composant parmi le support de soufflet pneumatique (22) et le corps d'appui (26) présente un corps d'encliquetage (60) et l'autre composant respectif parmi le support de soufflet pneumatique (22) et le corps d'appui (26) présente un évidement d'encliquetage (64) de telle sorte, qu'à l'état opérationnel de l'ensemble de ressort pneumatique (34), le corps d'encliquetage (60) est en prise d'encliquetage par complémentarité de forme avec l'évidement d'encliquetage (64), de sorte qu'un mouvement relatif de translation du corps d'appui (26) par rapport au support de soufflet pneumatique (22) est limité physiquement dans les deux directions opposées le long de la voie de saillie (V),
**caractérisé en ce que** le corps d'encliquetage (60) peut être enlevé du reste de l'ensemble de ressort pneumatique (34) dans une direction transversale à la voie de saillie (V).

2. Ensemble de ressort pneumatique (34) selon la revendication 1,
**caractérisé en ce que** l'engagement d'encliquetage est un engagement d'encliquetage non surmontable.

3. Ensemble de ressort pneumatique (34) selon la revendication 1 ou 2,
**caractérisé en ce qu'**au moins avant une introduction de la saillie d'accouplement (38) dans l'évidement d'accouplement (40) et donc avant la réalisation de l'engagement d'encliquetage, au moins une section d'engagement (60a, 60b) du corps d'encliquetage (60) conçue pour un engagement par complémentarité de forme direct avec l'évidement d'encliquetage (40) est précontrainte dans sa position d'engagement et peut être déplacée de la position d'engagement à l'encontre de cette précontrainte.

4. Ensemble de ressort pneumatique (34) selon la revendication 3,
**caractérisé en ce que** la section d'engagement (60a, 60b) est précontrainte dans sa position d'engagement par un ressort (62).

5. Ensemble de ressort pneumatique (34) selon la revendication 4,
**caractérisé en ce que** le corps d'encliquetage (60) est un ressort (62) et la section d'engagement (60a, 60b) est une section du ressort (62).

6. Ensemble de ressort pneumatique (34) selon la revendication 4 ou 5,
**caractérisé en ce que** le ressort (62) est un ressort à étrier (62) avec deux branches de ressort (62a, 62b) opposées l'une à l'autre par l'intermédiaire d'une fente de ressort (61) et reliées entre elles par un étrier de ressort (62c), dans lequel au moins une section d'engagement (60a, 60b) est formée sur chacune des branches de ressort (62a, 62b).

7. Ensemble de ressort pneumatique (34) selon la revendication 6,
**caractérisé en ce que** le ressort à étrier (62) peut être retiré, en tant que corps d'encliquetage (60), dans une direction transversale à la voie de saillie (V), aussi bien de l'évidement d'accouplement (40) que de la saillie d'accouplement (38) qui s'engage dans l'évidement d'accouplement (40).

8. Ensemble de ressort pneumatique (34) selon l'une des revendications précédentes,
**caractérisé en ce que** la saillie d'accouplement (38) est réalisée en se rétrécissant le long de la voie de saillie (V) en s'éloignant de la structure qui la porte ou/et **en ce que** l'évidement d'accouplement (40) est réalisé en s'élargissant en direction d'une ouverture d'introduction (57) à travers laquelle la saillie d'accouplement (38) s'engage dans l'évidement d'accouplement (40) lorsque l'ensemble de ressort pneumatique (34) est prêt à fonctionner.

9. Ensemble de ressort pneumatique (34) selon l'une des revendications précédentes,
**caractérisé en ce que** la saillie d'accouplement (38) est formée sur le support de soufflet pneumatique (22) et l'évidement d'accouplement (40) est formé sur le corps d'appui (26).

10. Ensemble de ressort pneumatique (34) selon l'une des revendications précédentes, **caractérisé en ce que** le corps d'encliquetage (60) est prévu sur le corps d'appui (26) et l'évidement d'encliquetage (64) est prévue sur la saillie d'accouplement (38).

11. Ensemble de ressort pneumatique (34) selon l'une des revendications précédentes,
**caractérisé en ce que** le corps d'appui (26) présente une partie de corps intérieure (42) avec l'évidement d'accouplement (40) et une partie de corps extérieure (44) entourant la partie de corps intérieure (42).

12. Ensemble de ressort pneumatique (34) selon la revendication 11,
**caractérisé en ce que** la partie de corps intérieure (42) ou/et la partie de corps extérieure (44) est ou sont une partie de manchon (42, 44).

13. Ensemble de ressort pneumatique (34) selon l'une des revendications précédentes,
**caractérisé en ce que** le corps d'encliquetage (60) et l'évidement d'encliquetage (64) sont entourés par une portion du corps d'appui (26) lorsque l'ensemble de ressort pneumatique (34) est à l'état opérationnel.

14. Essieu rigide (10) pour un véhicule utilitaire, comprenant un corps d'essieu (12) s'étendant le long d'une direction d'essieu (A) et avec au moins un ensemble de ressort pneumatique (34) selon l'une des revendications précédentes, dans lequel au moins un support de soufflet pneumatique (22) dépasse du corps d'essieu (12) transversalement à la direction d'essieu (A).
